## Europäisches Patentamt
## European Patent Office
## Office européen des brevets

(19)

(11) Veröffentlichungsnummer: **0 047 223**
**B1**

(12)

# EUROPÄISCHE PATENTSCHRIFT

(45) Veröffentlichungstag der Patentschrift:
**26.11.86**

(51) Int. Cl.⁴: **F 24 J 3/08**

(21) Anmeldenummer: **81730080.9**

(22) Anmeldetag: **24.08.81**

(54) **Anordnung zum Gewinnen von Erdwärme.**

(30) Priorität: **22.08.80 DE 3032109**

(43) Veröffentlichungstag der Anmeldung:
**10.03.82 Patentblatt 82/10**

(45) Bekanntmachung des Hinweises auf die Patenterteilung:
**26.11.86 Patentblatt 86/48**

(84) Benannte Vertragsstaaten:
**AT BE CH DE FR GB IT LI LU NL SE**

(56) Entgegenhaltungen:
**DE-A-2 829 456**
**DE-A-2 910 774**
**DE-A-2 928 761**
**FR-A-2 369 508**
**FR-A-2 470 938**

(73) Patentinhaber: **Hampe, Andreas, Dr.- Ing.,
Lotzestrasse 7, D-1000 Berlin 45 (DE)**

(72) Erfinder: **Hampe, Andreas, Dr.- Ing., Lotzestrasse
7, D-1000 Berlin 45 (DE)**

(74) Vertreter: **Christiansen, Henning, Dipl.- Ing.,
Dietrich- Schäfer- Weg 21, D-1000 Berlin 41 (DE)**

## Beschreibung

Die Erfindung betrifft eine Anordnung zum Gewinnen von Erdwärme mit vertikal angeordneten Wärmetauscherelementen und mindestens einer in der Nähe der Erdoberfläche horizontal verlaufenden Sammelleitung für das Wärmetransportmedium zum Verbinden der Wärmetauscherelemente mit einer Wärmenutzungsanordnung sowie mit Mitteln zur Rückführung von oberflächennaher wärme in das Erdreich. Derartige Anordnungen dienen, vorzugsweise in Verbindung mit Wärmepumpen, zur Nutzung von alternativen Energien für den Hausbereich, insbesondere für Heizzwecke.

Eine entsprechende Anordnung ist bekannt aus der DE-AI-29 10 774. Nachteilig ist dabei, daß zur Gewinnung von Erdwärme einerseits und Gewinnen der zum Rückführen zu Speicherzwecken dienenden Wärmeenergie andererseits zwei verschiedene Kreisläufe mit den entsprechenden Pumpen und Steuerelementen vorhanden sein müssen.

Aus der DE-AI-28 29 456 ist es weiterhin bekannt, mittels eines Sonnenkollektors, der speziell dazu ausgebildet ist, Wärmeenergie, welche nicht unmittelbar verbraucht wird, in einem Speicher zwischenzuspeichern. Eine Umwälzpumpe wird dabei auch dann weiter zu betrieben, wenn keine Energie durch einen Verbraucher entzogen wird.

Nachteilig ist dabei jedoch die Notwendigkeit eines separaten Speichers, der bei größerem Wärmebedarf ein beträchtliches Volumen aufweisen muß.

Der im Anspruch 1 angegebenen Erfindung liegt die Aufgab zugrunde, eine Anordnung der eingangs angegebenen Art derar zu vereinfachen, daß, insbesondere in der Übergangszei zwischen der warmen und der kalten Jahreszeit, gegenüber de bekannten Systemen eine deutliche Verbesserung der Wärmeaus beute erzielbar ist.

Ausgegangen wurde dabei von der Erkenntnis, daß in der Nähe der Erdoberfläche im Bereich von 0,1 bis zu 0,5 m Tiefe, wo die Sammelleitungen verlegt sind, während der überwiegenden Zeit im Jahresverlauf Temperaturen anzutreffen sind, die oberhalb derjenigen des Kühlmittels liegen. Diese oberflächennahen Temperaturverhältnisse ermöglichen in den gemäßigten Breiten im Jahresmittel einen zusätzlichen · Wärmeenergiegewinn, ohne daß zusätzliche Erdarbeiten oder Isoliermittel erforderlich wären. Dieser oberflächennahe Erdbereich folgt Temperaturschwankungen der umgebenden Außenluft mit einer Zeitkonstante von einigen Tagen.

So ist es vorzugsweise nach Tagen, an denen die oberflächennahen Bereiche der Erde durch Sonnenstrahlung erwärmt wurden, möglich, noch zusätzliche Wärme über die Sammelleitungen aufzunehmen, während der gegenteilige in Kauf zu nehmende Effekt, d.h. eine unerwünschte Abkühlung, bei Tagen mit Bodenfrost relativ selten ist.

Die Verwendung thermisch nicht isolierter Sammelleitungen, welche in gutem thermischen Kontakt zu der Erdoberfläche nahen Bereichen stehen, hat dabei darüber hinaus den Vorteil, daß die oberflächennahe Wärme, welche in den Tagen mit Sonneneinstrahlung reichlich vorhanden ist, genutzt werden kann, um die tiefergelegenen Schichten des Erdreiches, denen über die Wärmetauscherelemente die Wärme entzogen wird, zu erwärmen und somit diese Bereiche regelrecht als Speicher zu verwenden. · Hierbei ergibt sich der überraschende Effekt, daß sich die Ergiebigkeit der tiefer liegenden Erdschichten bei der Wärmegewinnung steigern läßt, wenn das durch die nicht thermisch isolierten Sammelleitungen fließende Wärmetransportmedium der Anlage Wärme aus den oberflachennahen Schichten in die tiefergelegenen Erdschichten überführt. Durch die hiermit verbundene Beschleunigung der Wiederaufnahme von Umgebungswärme durch die tiefer liegenden Erdschichten bei warmer Witterung steht eine Möglichkeit zur Verfügung, in der übergangszeit bei wechselhafter Witterung während der kühlen Wetterperioden eine höhere Wärmeausbeute über die Erdwärmetauscher zu erlangen, als es mit den bekannten Systemen möglich wäre. Eine derartige Form der "Speicherung" von Erdwärme ist plausibel, wenn berücksichtigt wird, daß die Wirksamkeit einer effektiv arbeitenden Erdwärmegewinnungsanlage nicht nur durch den zur Verfügung stehenden Wärmestrom, sondern auch durch die Wärmekapazität des benutzten Erdbereichs bestimmt wird, wobei die gespeicherte Wärme im Jahresmittel aus der Umgebung über die Erdoberfläche aufgenommen werden muß. Bei einer Länge der Wärmetauscherelemente von ca. 6 m und einem Abstand der einzelnen Wärmetauscherelemente von ca. 1,5 m bietet die resultierende Erdoberfläche zwischen den Elementen mit den dort verlegten Sammelleitungen und der· erfindungsgemäßen Anordnung in gemäßigten Breiten der Erde bei einer Temperatur des Wärmetransportmediums um 0° C eine gute Möglichkeit, den räumlichen Einzugsbereichs des jeweils ein Element umgebenden Erdreichs im Jahresmittel als Wärmespeicher trotz intensiver Nutzung bei kälteren Witterungsperioden auf einer relativ hohen Temperatur zu halten. Ein hohes Temperaturniveau der Wärmequelle erhöht dabei zusätzlich den Wirkungsgrad einer angeschlossenen Wärmepumpe.

Diese vorteilhafte Möglichkeit läßt sich insbesondere dann nutzbringend verwenden, wenn Heizwärme für das an die Wärmegewinnungsanlage angeschlossene Haus nicht - oder nicht vollständig - benötigt wird. In diesem Fall wird unter Abschaltung der Wärmepumpe die Erdwärmegewinnungsanlage sozusagen im "Kurzschluß" betrieben, so daß die Ergiebigkeit eines bestehenden Erdwärmegewinnungssystems vergrößert ist. Dieser Betriebszustand läßt sich bevorzugt in den Nachtstunden mit zum Nachtstromtarif gelieferter elektrischer Energie durchführen. So kann je nach Witterung in der Übergangszeit die während des Tages angefallene Oberflächenwärme in den Nachtstunden in die tiefergelegenen Erdschichten transportiert werden, wenn - bedingt durch die Nachtabsenkung für die Raumheizung keine Wärmeenergie mehr erforderlich ist -, um im Verlaufe des nächsten Tages durch erhöhte Wirksamkeit der Erdwärmetauscherelemente als Heizenergie verwendet zu werden.

Auf die gleiche Weise kann in den warmen Jahreszeiten das Erdreich in der Tiefe wiedererwärmt und darüber hinaus auf höhere Temperaturen als normal gebracht werden, um in der Heizperiode den Wärmeentzug bei höheren Temperaturen zu ermöglichen. Dieser aktive Wärmetransport wird vorteilhafterweise durch Temperaturfühler im oberflächennahen und tiefen Erdreich gesteuert.

Das gute Funktionieren der erfindungsgemäßen Anordnung beruht zu nicht geringem Teil darauf, daß der Wärmeverlust durch in der Nähe der Erdoberfläche verlegte Sammelleitungen bei kalter Witterung im Wärmegewinnungsbetrieb bei weitem nicht so groß ist, wie der sich bei der Rückspeicherung von über die Sammelleitungen in oberflächennahen Schichten aufgenommenen Wärme in tiefere Erdschichten ergebende Nutzen:

Bei Wärmeentnahme ist der oberflächennahe Bodenbereich trotz herrschender Temperaturen weit unter dem Gefrierpunkt selten auf mehr als wenige Grade unter 0° C abgekühlt, so daß das Wärmetransportmedium nur einen unwesentlichen Wärmeverlust erleidet, der dann besonders gering ist, wenn die Maßnahmen zur Erhöhung der Wärmeleitfähigkeit zwischen Sammelleitungen und oberflächennahen Erdbereichen sich vorzugsweise auf die den Erdwärmetauscherelementen das Wärmetransportmedium zuführenden Leitungen erstrecken, da bei Verwendung einer Wärmepumpe im Kreislauf hier die Temperatur des Mediums - und damit ein eventueller Wärmeverlust - besonders gering ist.

Weitere betriebsmöglichkeiten und Einzelheiten der Erfindung und der in den Unteransprüchen angegebenen Weiterbildungen werden anhand eines bevorzugten Ausführungsbeispiels, das in den Zeichnungen dargestellt ist, näher beschrieben. Es zeigen:

Figur 1 ein Ausführungsbeispiel der erfindungsgemäßen Anordnung zur Gewinnung von Erdwärme in perspektivischer Darstellung,

Figur 2 einen schematischen Installationsplan für die Anordnung gemäß Figur 1,

Figur 3 ein Diagramm der den verschiedenen Betriebszustanden zugeordneten Stellungen der Steuerventile sowie

Figur 4 Einzelheiten der in Figur 2 wiedergegebenen Steuereinheit.

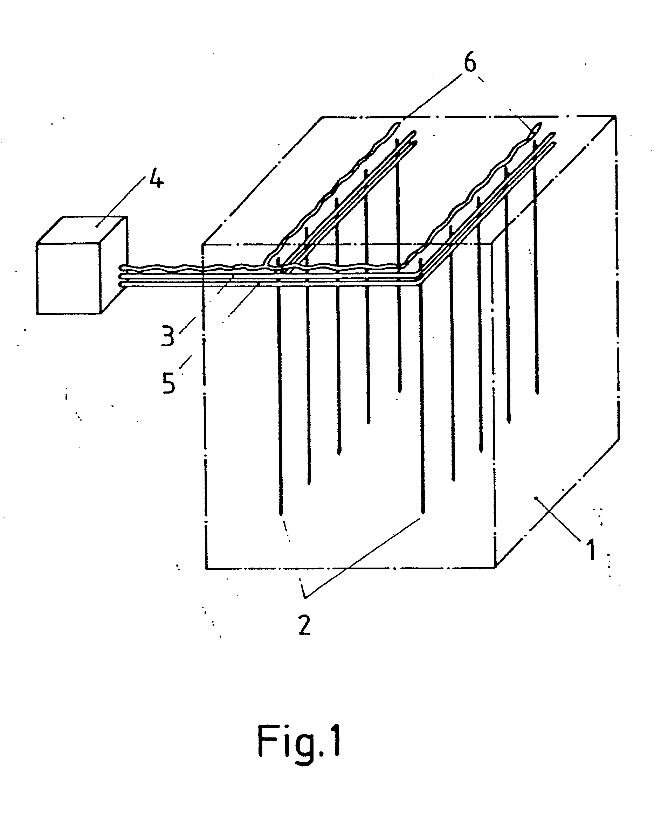

Bei der in Figur 1 dargestellten Erdwärmegewinnungsanordnung sind innerhalb des Erdreichs 1 eine Anzahl von Wärmetauscherelementen 2 vorgesehen, welche mit einer aus polyethylen bestehenden Sammelleitung 3 für die Zufuhr des durch eine Wärmenutzungsanordnung 4 abgekühlten Wärmetransportmediums verbunden sind. Das Wärmetransportmedium, beispielsweise eine bis unter den Gefrierpunkt abkühlbare Salzsole, gelangt innerhalb des Wärmetauscherelementes in einer Rohrleitung bis in dessen tiefsten Bereich und wird anschließend wieder nach oben geführt, um in einer weiteren Sammelleitung 5 für das erwärmte Transportmedium zur Wärmenutzungsanordnung 1 zu gelangen.

Dabei sind die Sammelleitungen 3 und 5 gegenüber dem umgebenden Erdreich nicht thermisch isoliert und ermöglichen einen guten Wärmeaustausch mit dem darin fließenden Medium. Die Oberfläche der Sammelleitungen ist gegebenenfalls - durch dort aufgebrachte Rippen oder eine gewellte Oberfläche (in der Zeichnung nicht dargestellt) oder einen mäanderförmigen Verlauf der Leitungen vergrößert, oder die Sammelleitungen sind aus einem metallischen Werkstoff hergestellt um den Wärmeaustausch mit den oberflächennahen Bereichen der Erdoberfläche noch heraufzusetzen. Der damit verbundene Effekt des Wärmetransportes aus den oberflächennahen in tiefer gelegene Erdschichten läßt sich weiter steigern, wenn in den für die Sammelleitungen üblicherweise ausgehobenen Gräben zusätzliche, den Sammelleitungen parallel oder in Serie geschaltete Leitungen verlaufen, welche ohne wesentliche zusätzliche Kosten installiert werden können. Die Wirkung dieser Leitungen 6 wird außerdem vergrößert, wenn sie witterungsabhängig gezielt zuschaltbar sind, wie es aus dem nachfolgend zu beschreibenden Installationsplan ersichtlich ist. Die den Wärmekontakt zwischen Wärmetransportmedium und oberflächennahen Erdschichten verbessernden Maßnahmen beziehen sich bevorzugt auf die Zuführungsleitungen, da in diesem Fall - insbesondere bei Verwendung einer Wärmepumpe im Kreislauf - der sich im Wärmennutzungsbetrieb ergebende Verlust der aus tieferen Erdschichten ein Minimum ist.

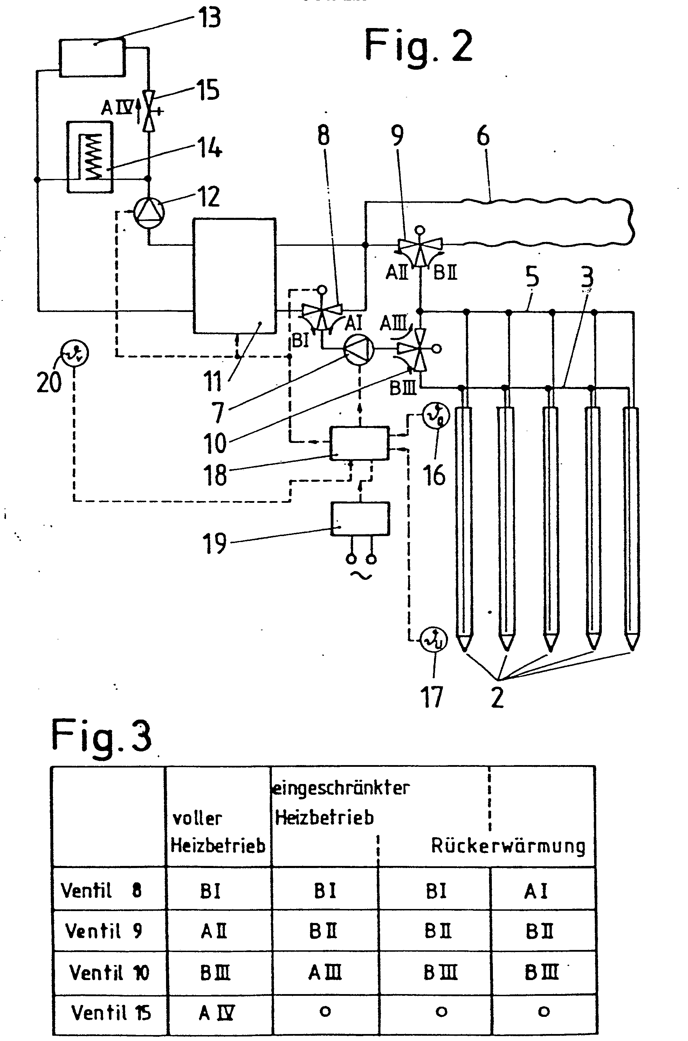

In Figur 2 sind diejenigen schematisch dargestellten Elemente, die in Figur 1 körperlich dargestellt sind, mit übereinstimmenden Bezugzeichen versehen. Der Kreislauf des Wärmetransportmediums wird durch eine Umwälzpumpe 7 aufrechterhalten und durch Ventile 8 bis 10 beeinflußt.

Temperaturfühler ($\vartheta_o$) 16 und ($\vartheta_u$) 17 steuern über eine Steuereinheit 18 die Umwälzpumpe 7 und das Ventil 8 in Abhängigkeit von den im Erdboden herrschenden Temperaturen. Dabei wird beim Unterschreiten einer vorgegebenen positiven Differenztemperatur ($\vartheta_o - \vartheta_u$) die Pumpe

stillgesetzt, so daß kein Transport von Wärme aus den ober flächennahen Schichten in tiefergelegene Erdschichten mehr erfolgt. Wird durch Sonneneinstrahlung die Erdbodenoberfläche wieder erwärmt, so kann ein automatisches Wiedereinschalten stattfinden.

Mindestens einer der Temperaturfühler 16 und 17 sind einschließlich ihrer Leitungsverbindungen, bevorzugt direkt mit einem der Wärmetauscherelemente 2 mechanisch verbunden, s daß sie ohne zusätzliche Grabungsarbeiten im Erdreich angebracht werden können.

Vorteilnafterweise wird bei vorhandener Temperaturdifferenz eine mehrere Schaltstufen aufweisende Umwälzpumpe 7 auf eine kleinere Leistungsstufe heruntergeschaltet, wenn ein den Strömungswiderstand der Wärmepumpe 11 kurzschließendes Ventil 8 vorgesehen ist.

Die Wärmenutzungsanordnung besteht aus einer Wärmepumpe 11 und einem Heizkreislauf, der eine separate Umwälzpumpe 12, einen die Heizanordnung eines Hauses repräsentierenden Heizkörper 13, einen Wärmeaustauscher 14 für die Brauchwassererwärmung und ein Abstellventil 15 für den Heizungsbereich aufweist.

In Figur 3 sind schematisch die verschiedenen Betriebszustände in Abhängigkeit von der witterungs- und heizbedarfsabhängig vorzunehmenden Einstellung der Ventile 8 bis 10 sowie 15 wiedergegeben. Die sich im Heizbetrieb ergebenden Ventilstellungen sind in der ersten Spalte der Übersicht gemäß Figur 3 wiedergegeben. Sie entsprechen dem Erdwärmenutzungsbetrieb bekaner Anordnungen. Durch die thermische Auslegung der Sammelleitungen 3 und/oder 5 wird der zuvor dargestellte Wärmeaustausch zwischen oberflächennahen und tiefer gelegenen Erdschichten ermöglicht. Sind zusätzliche, den Wärmeaustausch zwischen Transportmedium und oberflächennahen Erdschichten begünstigende Leitungen 6 nicht vorhanden, so kann der Wärmeaustausch auch bei abgeschalteten Wärmenutzungssystem 4 durch Absperren des Flusses durch die Wärmepumpe 11 (Ventilstellung A I) erfolgen. (Bei einer vereinfachten Anordnung kann das Ventil A I entfallen. In diesem Fall wird die Pumpe 7 bei abgeschalteter Wärmepumpe 11 betrieben.) Sind dagegen weitere oberflächennahe Leitungen 6 vorgesehen, so werden diese bei einem derartigen Betriebszustand zweckmäßigerweise zugeschaltet (Ventil 9 in Stellung B II), entsprechend der Darstellung in Figur 3 (rechte Spalte).

Von der Steuereinheit 18 werden auch über einen Fühler 20 für die Vorlauftemperatur die bei Heizbetrieb wirksamen Elemente, nämlich das Ventil 8 (Stellung B I), die Wärmepumpe 11 und die die Umwälzpumpe 12, beeinflußt.

Ein besonders intensiver Rückerwärmungsbetrieb, mit zur Wirksamkeit des Wärmeaustausches in den oberflächennahen Bereichen durch die entsprechende Stellung des Ventils 9 zugeschalteter Leitung 6, ist in Figur 3 rechte Spalte dargestellt.

In den beiden mittleren Spalten von Figur 3 sind noch Betriebsvarianten für den eingeschränkten Wärmenutzungsbetrieb wiedergegeben, welche durch Schließen des Ventils 15 im Nutzkreislauf einstellbar sind. Der eingeschränkte Wärmebedarf eines Hauses ist hierbei am Beispiel der Beschränkung auf die Brauchwasserbereitung über den Wärmetauscher 14 dargestellt.

Bei den wiedergegebenen eingeschränkten (Heiz-)Betrieb sind entweder die zusätzlichen Leitungen 6 zur Wärmegewinnung separat nutzbar (Es wird nur Wärme aus oberflächennahen Schichten entzogen, das tiefer gelegene Reservoir wird geschont (Spalte 2 in Figur 3) oder aber es erfolgt trotz Wärmenutzungsbetriebs aus den oberflächennah verlegten Leitungen 6 sogar eine Rückerwärmung der tieferliegenden Erdbereiche über die Wärmetauscherelemente 2 (Ventilstellungen gemäß Spalte 3 in Figur 3).

Der reine Betrieb zur Rückerwärmung des die Wärmetauscherelemente 2 umgebenden Erdreichs unter Einschluß der zusätzlich im oberflächennahen Bereich verlegten Leitungen 6 (Ventilstellungen gemäß Spalte 4 in Figur 3) wird zweckmäßigerweise bei durch eine Schaltuhr 19 oder eine entsprechende Signale aus dem Stromversorgungsnetz gesteuerten Nachtstrombetrieb der Pumpe 7 ausgeführt, so daß hier, bei entsprechenden Tarifbedingungen des Elektrizitätsversorgungsunternehmens nur minimale Kosten entstehen, die von der erzielten zusätzlichen späteren Wärmeentnahmemöglichkeit über die Wärmetauscherelemente 2 bei weitem aufgewogen werden.

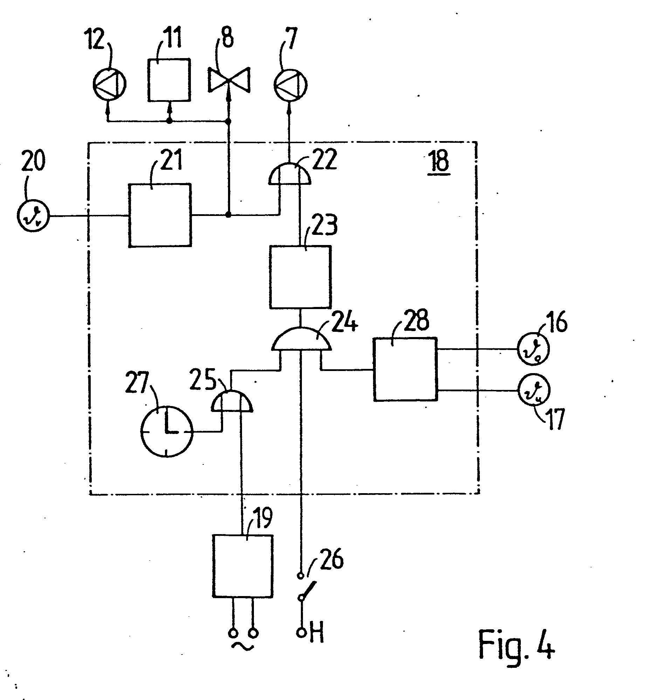

In Figur 4 ist die in Figur 2 wiedergegebene Steuereinheit zur Ansteuerung der Pumpe 7 im Detail dargestellt.

Im Betriebszustand der Erdwärmegewinnung zum Betreiben einer Heizung wird die Pumpe 7 von einem Heizungssteuerteil 21, welches von dem Fühler 20 für die Vorlauftemperatur beeinflußt ist, zusammen mit der Wärmepumpe 11 und der Umwälzpumpe 12 aktiviert, wobei das Ventil 8 in die den Wärmepumpenkreislauf einbeziehende Position B I gesetzt wird. Die Ansteuerung der Pumpe erfolgt dabei über ein ODER-Gatter 22 - als logisches Schaltmittel - und (nicht dargestellte) Leistungsschaltmittel.

In den kurzen oder längerfristigen Betriebspausen der Heizung wird die Pumpe 7 mit herabgesetzter Leistung weiterbetrieben. In diesem Fall erfolgt die Ansteuerung der Pumpe 7 über einen weiteren Eingang des ODER-Gatters 22, der mit dem Ausgang eines Intervallschalters 23 verbunden ist. Um Vorschaltwiderstände (und die daraus resultierenden Energieverluste) sowie zusätzliche Wicklungen des Pumpenmotors zu vermeiden, wird die Pumpe 7 in Intervallen eingeschaltet, deren Zeitverhältnis der gewünschten Leistungsherabsetzung entspricht.

Die gewünschten Bedingungen für eine automatische Einschaltung de Rückerwärmungsbetriebs werden mittels weiterer logischer Schaltmittel erzeugt. Die logischen Verknüpfungen werden durch ein UND-Gatte 24 realisiert, wobei dessen einem Eingang das Ausgangssignal eine ODER-Gatters 25 zugeführt wird. Das Ausgangssignal des UND-Gatter 24 aktiviert den Intervallschalter 23. Für den Rückerwärmungsbet rieb ist Voraussetzung, daß ein Schalter 26, der mit einem au logischem H-Potential befindlichen Anschluß verbunden ist, einge schaltet ist. Außerdem muß ein Temperaturkomparator 28 zum Zeiche dafür, daß zwischen den Temperaturfühlern 16 und 17 eine positi ve Temperaturdifferenz herrscht, ein Ausgangssignal abgeben. Ein Rückerwärmung erfolgt also besonders dann, wenn die Pausen zwische Heizphasen besonders lang oder besonders häufig sind, wenn also die Außentemperatur bereits relativ hoch liegt und die Heizung nich intensiv genutzt wird. Damit erfolgt die Rückerwärmung vorwiegend zu Zeiten, die sonst nutzlose Standzeiten der Anordnung bilden würden.

Über das ODER-Gatter erfolgt eine zusätzliche Zeitsteuerung des Rückerwärmungsbetriebs entweder über eine Zeituhr 27 oder aber über das mittels einer Rundsteueranlage über das Stromversorgungsnetz aktivierte Steuerteil 19.

## Patentansprüche

1. Anordnung zum Gewinnen von Erdwärme mit vertikal angeordneten Wärmetauscherelementen (2) und mindestens einer in der Nähe der Erdoberfläche horizontal verlaufenden Sammelleitung (3, 5) für das Wärmetransportmedium zum Verbinden der Wärmetauscherelemente mit einer Wärmenutzungsanordnung (13, 14) sowie mit Mitteln zur Rückführung von oberflächennaher Wärme in das Erdreich, gekennzeichnet durch
   a) die Ausbildung der Sammelleitung (3, 5) als Wärmetauscher in Bezug auf das oberflächennahe Erdreich (1),
   b) eine Steuereinheit (18), durch die das Wärmetransportmedium über eine Umwälzpumpe (7) auch bei abgeschalteter Wärmepumpe (11) nacheinander durch die Sammelleitung (3, 5) und die Wärmetauscherelemente (2) getrieben wird.

2. Anordnung nach Anspruch 1, gekennzeichnet durch eine Leistungsverminderung der Umwälzpumpe (7) durch die Steuereinheit (18) gegenüber dem normalen Betrieb zur Erdwärmenutzung.

3. Anordnung nach Anspruch 2, gekennzeichnet durch logische Schaltmittel (22) zur Herabsetzung der Leistung der Umwälzpumpe (7) zum Nutzwärmeentzug.

4. Anordnung nach einem der Ansprüche 2 oder 3, gekennzeichnet durch durch Taktschaltmittel (23) zum intervallweisen Ein- und Ausschalten der Umwälzpumpe (7) beim Betrieb mit verminderter Leistung.

5. Anordnung nach Anspruch 1, dadurch gekennzeichnet, daß zur Verringerung des thermischen Übergangswiderstands zwischen Wärmetransportmedium und Erdreich der Sammelleitung (3, 5) zusätzliche, einen geringen thermischen übergangswiderstand aufweisende Leitungen (6) parallel und/oder in Reihe geschaltet sind.

6. Anordnung nach Anspruch 1, dadurch gekennzeichnet, daß zur Verringerung des thermischen Übergangswiderstands zwischen Wärmetransportmedium und Erdreich die wirksame Oberfläche der Sammelleitung (3, 5) gewellt ausgebildet ist, mit umlaufenden Rippen versehen ist und/oder mäanderförmig verläuft.

7. Anordnung nach Anspruch 1, dadurch gekennzeichnet, daß die Sammelleitung (3, 5) zur Verringerung des thermischen Übergangswiderstands zwischen Wärmetransportmedium und Erdreich aus einem metallischen Werkstoff besteht.

8. Anordnung nach Anspruch 5, dadurch gekennzeichnet, daß die zusätzlichen Leitungen (6) und/oder die Sammelleitung (3, 5) durch Ventile (9, 10) separat an den Anschluß der Wärmenutzungsanordnung (4) anschaltbar sind.

9. Anordnung nach einem der vorangehenden Ansprüche, gekennzeichnet durch jeweils in einem oberflächennahen und in einem tiefergelegenen Erdbereich in der Nähe des Wärmetauscherelements angeordnete Temperaturfühler (16 bzw. 17) zur Abgabe eines eine Einschaltbedingung bildenden Signals an einen Eingang von die Steuereinheit (18) in den Schaltzustand setzenden Logikschaltmitteln (24) bei Überschreitung einer vorgegebenen positiven Differenztemperatur zwischen dem oberflächennahen und dem tiefergelegenen Erdbereich.

10. Anordnung nach Anspruch 9, dadurch gekennzeichnet, daß mindestens einer der Temperaturfühler (16, 17) mit den Wärmetauscherelement (2) mechanisch verbunden ist.

11. Anordnung nach einem der vorangehenden Ansprüche, gekennzeichnet durch einen mittels Signalen aus dem Stromversorgungsnetz aktivierbaren Signalgeber und/oder eine Schaltuhr (19) zur Abgabe eines eine Einschaltbedingung liefernden Signals an einen Eingang der die Steuereinheit (18) in den Schaltzustand setzenden weiteren logischen Schaltmittel (24, 25).

## Claims

1. A configuration for the recovery of ground heat with vertically arranged heat-exchange elements (2), and with at least one collector line (3 and 5) for the heat transfer fluid, to be installed in the ground to run horizontally in the vicinity of the surface of the earth, for the purpose of connecting the heat-exchange elements with a heat utilization system (13 and 14), as well as with means for return of heat from near the surface of the earth down to deeper layers of the ground, which said configuration is characterized by the fact that the means for return of heat to deep in the ground consist of the following:

a) Installation of the collector line (3 and 5) as a heat transfer device in relation to the ground near the surface (1), and

b) Provision of a control unit (18) by means of which the heat-transfer fluid is pumped through the collector line (3 and 5) and the heat-exchange elements (2) by a circulating pump (7) even while the heat pump (11) is switched off.

2. A configuration in accordance with Claim 1, characterized by the feature that, by means of the control unit (18), the circulating pump (7) can be operated at a level with output reduced in comparison to normal operations for utilization of ground heat.

3. A configuration in accordance with Claim 2, characterized by the feature that logical circuitry (22) is provided which reduces the output of the circulating pump (7) for the removal of the available heat.

4. A configuration in accordance with Claims 2 or 3, characterized by the feature that system operation is controlled at reduced output by means of timing equipment (23) which intermittently switches the circulating pump (7) on and off.

5. A configuration in accordance with Claim 1, characterized by the feature that, in order to ensure lessening of the thermal transition resistance between heat-transfer fluid and surrounding ground additional lines (6) with low thermal resistance are hooked up to the collector line (3 and 5), to be switched in parallel and/or in series.

6. A configuration in accordance with Claim 1, characterized by the feature that, in order to ensure lessening of the thermal transition resistance between heat transfer fluid and surrounding ground, the effective surface of the collector line (3 and 5) has been designed in corrugated form, with circumferential fins, or with installation to be provided in snaky (meandering) form.

7. A configuration in accordance with Claim 1, characterized by the feature that, in order to ensure lessening of the the thermal transition between heat-transfer fluid and the surrounding ground, the collector line (3 and 5) be constructed of metallic material.

8. A configuration in accordance with Claim 5, characterized by the feature that the additional lines (6) and/or the collector line (3 and 5) can be separately switched onto the connection point for the heat utilization system (4) by virtue of their provision with valves (9 and 10).

9. A configuration in accordance with any one of the aforementioned claims, characterized by the feature that temperature sensors (16 and 17) are provided near the surface of the ground and deep in the earth, respectively, which sensors will emit a signal for satisfaction of switch-on conditions to an input of the logical switching equipment (24) for placing the control unit (18) into the proper switching state, in the event that a preselected positive temperature differential is exceeded between those layers.

10. A configuration in accordance with Claim 9, characterized by the feature that at least one of the temperature sensors (16 or 17) is mechanically connected to a heat-exchange element (2).

11. A configuration in accordance with any one of the aforementioned claims, characterized by the feature that a signal generator which can be activated by means of signals from the power supply system and/or a timer (19) are provided which will emit a signal for satisfaction of switch-on conditions to an input of the logical switching equipment (24 and 25) for placing the control unit (18) into the proper switching state.

## Revendications

1. Dispositif pour l'extraction de chaleur géothermique à l'aide d'éléments échangeurs de chaleur (2) disposés verticalement et d'au moins un collecteur (3, 5) de l'agent de transport thermique, installé horizontalement à faible profondeur pour relier les éléments échangeurs de chaleur à un dispositif d'exploitation de la chaleur (13, 14) ainsi qu'à des agents de réintroduction de la chaleur de surface dans le sol.

caractérisé par

a) le développement du collecteur (3, 5) comme échangeur de chaleur en ce qui concerne la partie du sol proche de la surface (1),

b) une unité de commande (18), par laquelle l'agent de transport thermique est propulsé par une pompe de circulation (7), même lorsque la pompe à chaleur (11) est arrêtée, d'abord dans le collecteur (3, 5) puis dans les éléments échangeurs de chaleur (2).

2. Dispositif selon la revendication 1, caractérisé par une réduction de puissance de la pompe de circulation (7) du fait de l'élément de commande (18) par rapport au fonctionnement normal d'exploitation de la chaleur géothermique.

3. Dispositif selon la revendication 2, caractérisé par un élément logique (22) pour réduire la puissance de la pompe de circulation (7) et en retirer de la chaleur utile.

4. Dispositif selon l'une des revendications 2 ou 3, caractérisé par un commutateur à impul sions (23) de commande par intervalles de la pompe de circulation (7) lors du fonctionnement en puissance réduite.

5. Dispositif selon la revendication 1, caractérisé par le fait que, pour réduire la résistance thermique de contact entre l'agent de transport thermique et le sol autour du collecteur (3, 5), des conduits supplémentaires (6), présentant une résistance thermique de contact moindre, sont branchés en parallèle et/ou en série.

6. Dispositif selon la revendication 1, caractérisé par le fait que, pour réduire la résistance thermique de contact entre l'agent de transport thermique et le sol, la surface active du colleteur (3, 5) est ondulée, munie de nervures circulaires et/ou disposée en méandres.

7. Dispositif selon la revendication 1, caractérisé par le fait que le collecteur (3, 5), pour réduire la résistance thermique de contact entre l'agent de transport thermique et le sol, est constitué par une matière métallique.

8. Dispositif selon la revendication 5, caractérisé par le fait que les conduits supplémentaires (6 et/ou le collecteur (3, 5) peuvent être branchés séparément par des vannes (9, 10) sur le raccordement du dispositif d'utilisation de la chaleur (4).

9. Dispositif selon l'une des revendications ci-dessus, caractérisé par des sondes de température (16 ou 17) placées respectivement près de la surface du sol et en profondeur pour transmettre un signal de mise en condition de branchement à une entrée de commutateurs logiques (24) de mise en condition de branchement de l'unité de commande (18), lorsque l'écart de température entre le sol près de la surface et le sol en profondeur dépasse une valeur positive donnée.

10. Dispositif selon revendication 9, caractérisé par le fait qu'au moins une des sondes de température (16, 17) est reliée mécaniquement à l'élément échangeur de chaleur (2).

11. Dispositif selon l'une des revendications ci-dessus, caractérisé par un transmetteur de signaux pouvant être actionné par des signaux en provenance du réseau d'alimentation électrique et/ou par un interrupteur horaire (19) transmettant un signal de mise en condition de branchement à une entrée des autre commutateurs logiques de branchement (24, 25) mettant l'unité de commande (18) en état de commutation.

Fig.1

# Fig. 2

# Fig. 3

| | voller Heizbetrieb | eingeschränkter Heizbetrieb | | Rückerwärmung |
|---|---|---|---|---|
| Ventil 8 | B I | B I | B I | A I |
| Ventil 9 | A II | B II | B II | B II |
| Ventil 10 | B III | A III | B III | B III |
| Ventil 15 | A IV | o | o | o |

3

Fig. 4